# EUROPÄISCHE PATENTSCHRIFT

(11) **EP 2 090 794 B1**
(45) Veröffentlichungstag und Bekanntmachung des Hinweises auf die Patenterteilung: **07.09.2011**
(21) Anmeldenummer: 08172090.6
(22) Anmeldetag: 18.12.2008
(51) Int. Cl.: F16C 19/52, F16C 25/06, B23Q 1/34, B23Q 11/00, F16K 17/196

(54) **Lageranordnung**
Bearing assembly
Agencement de palier

(30) Priorität: 13.02.2008 DE 102008008855
(43) Veröffentlichungstag der Anmeldung: 19.08.2009
(73) Patentinhaber: Schaeffler Technologies GmbH & Co. KG, 91074 Herzogenaurach (DE)
(72) Erfinder: Claus, Sven, 90489 Nürnberg (DE); Mensch, Sergej, 97525 Schwebheim (DE); Schäfer, Christian, 90453 Nürnberg (DE)

(56) Entgegenhaltungen:
- EP-A- 0 000 303
- DE-A1- 2 403 337
- DE-A1- 3 927 855
- DE-A1-102004 062 320
- DE-U- 1 745 866
- US-A- 4 328 671

## Beschreibung

### Gebiet der Erfindung

Die Erfindung betrifft eine Lageranordnung umfassend eine Welle, die in zwei an Lagerböcken angeordneten Wälzlagern, von denen ein erstes als Festlager ausgeführt ist, drehgelagert ist.

### Hintergrund der Erfindung

Derartige Lageranordnungen sind vornehmlich Teil von Vorschubsystemen mit Gewindetrieben, wie sie beispielsweise im Bereich der Werkzeugmaschinen Einsatz finden. Auf der in zwei Wälzlagern, die als einreihige oder mehrreihige Einzel- oder Doppellager ausgeführt sein können, gelagerten Gewindespindel läuft eine Spindelmutter, mit der das zu bewegende Maschinenteil gekoppelt ist. An solche Vorschubspindeln und ihre Lagerung werden hohe Anforderungen gestellt, beispielsweise eine hohe statische und dynamische Steifigkeit, eine hohe axiale Tragfähigkeit sowie die Realisierung hoher Beschleunigungen und Geschwindigkeiten. Probleme bei Vorschubspindeln ergeben sich durch eine Ortsabhängigkeit der Axialsteifigkeit der Spindel, die von der Position der Gewindetriebmutter beeinflusst wird, sowie eine längenabhängige Axialsteifigkeit, ferner ist eine Begrenzung der Spindeldrehzahl und damit der Verfahrgeschwindigkeit durch die biegekritische Drehzahl der Spindel sowie durch Wärmedehnungen bzw. Wärmespannungen infolge der Erwärmung der Gewindespindel im Betrieb gegeben. Um insbesondere den rein mechanischen Anforderungen Rechnung zu tragen, wird eine Fest-Fest-Lagerung der Gewindespindel angestrebt. Diese ermöglicht es, den Einfluss der Position der Gewindetriebmutter auf die Axialsteifigkeit zu reduzieren und das Axialsteifigkeitsniveau anzuheben. Eine solche Lagerung zeichnet sich ferner durch eine hohe statische und dynamische Axialsteifigkeit aus, ferner kann eine hohe biegekritische Drehzahl und eine hohe knickkritische Axialspindelmutterlast erreicht werden. Mit üblichen Fest-Fest-Lagerungen können jedoch keine thermischen Dehnungen der Spindel im Betrieb aufgefangen bzw. ausgeglichen werden, sofern nicht besondere Vorkehrungen getroffen werden. Hierzu sieht DE 10 2004 062 320 B4 eine Lageranordnung vor, bei der ein Lager mit einer Kupplung versehen ist, die einen Aufnahmeraum aufweist, in dem ein viskoelastisches Material vorgesehen ist, das sich je nach Krafteinwirkung viskos, plastisch, elastisch oder starr verhält. Bei einer niedrigen Wellendrehfrequenz kommt es zu keiner Abstützung des inneren Kupplungselements gegen das äußere Kupplungselement, was es ermöglicht, dass die ergebende thermische Dehnung, die langsam vonstatten geht, ausgeglichen werden kann, indem das innere Kupplungselement relativ zum äußeren Kupplungselement axial verschoben wird. Hingegen werden axiale Kräfte hoher Frequenz, z. B. Schwingungen aufgrund des Betriebs der Vorschubspindel, abgestützt, so dass das innere Kupplungselement gegen das äußere Kupplungselement abgestützt ist. Für thermische Dehnungen wirkt die dort beschriebene Lageranordnung somit wie eine Lageranordnung mit einem Festlager und einem Loslager. Für Kräfte hoher Frequenz wirkt die Lageranordnung wie eine solche mit zwei Festlagern. Zwar kann über die dort beschriebene Lageranordnung ein thermischer Längenausgleich realisiert werden, jedoch ist die konstruktive Ausführung der dort beschriebenen Lageranordnung aufwändig, ihre Funktion hängt stark von dem Verhalten des viskoelastischen Materials ab. Weiterhin können keine Axialschwingungen mit Kraftamplituden mit Mittelwert ≠0 sowie konstant einwirkende Axialkräfte aufgenommen werden. Derartige Belastungen haben zur Folge, dass sich die in DE 10 2004 062 320 B4 beschriebene Lösung axial in ihre Endlage verschiebt. Weiterhin stellt diese Lösung eine reaktive Lösung dar, die auf den am Lager auftretenden Axialschwingungen beruht. Oftmals sind diese aber nicht bekannt.

Aus der nachveröffentlichten deutschen Patentanmeldung DE 10 2007 054 378 ist eine Lageranordnung bekannt, bei der das erste Wälzlager als Festlager ausgeführt ist, während das zweite als zwischen einer Festlagerfunktion und einer Loslagerfunktion schaltbares Wälzlager ausgeführt ist. Hierzu weist das Wälzlager eine elastische Membran auf, die eine Druckkammer radial nach außen begrenzt. Diese Druckkammer ist mit einem Druckmedium befüllbar. Die Membran legt sich reibschlüssig an ein sie radial umgebendes Widerlager an, wenn die Druckkammer mit dem Druckmedium befüllt ist, so dass das Wälzlager über diese reibschlüssige Anlage radial wie axial gesperrt ist, mithin also als Festlager geschaltet ist. Wird die Druckkammer wieder entlastet, so formt sich die Membran wieder zurück, die reibschlüssige Verbindung wird gelöst, das Lager ist als Loslager geschaltet und kann sich etwas axial bewegen, um etwaige axiale Spannungen ausgleichen zu können.

DE 39 27 855 A1 zeigt eine Vorschubspindel-Lagerstruktur mit einem Hauptkörperteil, einem verschiebbar in dem Hauptkörperteil angeordneten Lagerhalteteil, einem zwischen dem Lagerteil und dem Hauptkörperteil angeordneten Klemmteil zur Festlegung des Lagerhalteteils und des Hauptkörperteils sowie einer Einrichtung zur Betätigung des Klemmteils entsprechend Faktoren bzw. Bedingungen, die auf die Wärmeerzeugung in der Vorschubspindel bezogen sind. Das Lagerhalteteil wird mit Hilfe des Klemmteils durch eine Druckbeaufschlagung radial nach innen gegen einen dem Lagerhalteteil zugehörigen Abschnitt verspannt.

### Zusammenfassung der Erfindung

Der Erfindung liegt damit das Problem zugrunde, eine einfach aufgebaute Lageranordnung anzugeben, die ohne besondere Vorkehrungen in eine Arbeitsmaschine integriert und über die dortseits vorhandenen Versorgungsmedien betätigt werden kann.

Zur Lösung dieses Problems ist eine Lageranordnung umfassend eine Welle, die in zwei an Lagerböcken angeordneten Wälzlagern, von denen ein erstes als Festlager ausgeführt ist, drehgelagert ist, vorgesehen, die sich dadurch auszeichnet, dass das zweite Wälzlager wenigstens eine von einer elastischen Membran radial nach außen begrenzte, mit einem Druckmedium befüllbare Druckkammer aufweist, welche Membran sich bei in der Druckkammer anstehendem Druck radial nach außen wölbt und sich bei fehlendem Druck elastisch zurückverformt, derart, dass das Wälzlager in einem Lagerbock zur axialen Fixierung verklemmbar und im nicht geklemmten Zustand axial beweglich ist, wobei der Druckkammer eine Einrichtung zur Erhöhung des Drucks des zugeführten Druckmediums vorgeschaltet ist.

Bei der erfindungsgemäßen Lageranordnung ist eines der beiden als Festlager ausgeführten Spindellager gesteuert radial verspannbar und damit radial verklemmbar, worüber durch Reibschluss eine hohe axiale Haltekraft erzeugt werden kann. Die Übertragung von aus dem Betrieb resultierenden Axiallasten ist bei gleichzeitig hoher Axialsteifigkeit möglich. Das heißt, dieses Wälzlager weist die mechanisch vorteilhaften Eigenschaften eines Festlagers auf. Bei Bedarf ist es möglich, die radiale Verspannung und damit radiale Verklemmung wieder zu lösen, so dass sich das Lager temporär wie ein Loslager verhält, es ist axial beweglich. Auftretende Wärmedehnungen bzw. Wärmespannungen seitens der Gewindespindel können im gelösten, also nicht geklemmten Zustand ausgeglichen werden, es kommt zu einer wenngleich sehr kurzen Ausgleichsbewegung von wenigen Hundertstel oder Zehntel Millimetern zwischen dem Lager und einem der radialen Fixierung dienenden Lagerbock. Spannungen können also vorteilhaft abgebaut werden und wirken sich nicht nachteilig auf den Betrieb, insbesondere die Lebensdauer der Lager, aus. Sobald die Spannungen abgebaut sind, kann das Wälzlager erneut reibschlüssig mit dem Lagerbock verklemmt werden, es ist dann erneut axial fixiert und kann hohe Lasten aufnehmen.

Um die gesteuerte radiale Verklemmung zu ermöglichen, ist erfindungsgemäß ein Wälzlager mit einer Druckkammer versehen, die mit einem Druckmedium, sei es hydraulisch oder pneumatisch, beaufschlagt werden kann. Die Druckkammer ist radial über eine Druckmembran begrenzt, die sich bei anstehendem Druck leicht radial nach außen wölbt und sich reibschlüssig an ein entsprechendes Widerlager im Lagerbock spannt. Je nach anstehendem Druck kann eine beliebig hohe Haltekraft erzeugt werden, die zu einer vollkommen festen axialen Fixierung führt. Der zum radialen Verformen der Membran benötigte hohe Druck wird mit besonderem Vorteil über eine der Druckkammer vorgeschaltete Einrichtung zur Druckerhöhung erzeugt. Dies bietet den besonderen Vorteil, die Lageranordnung ohne weiteres in eine übliche Arbeits- oder Werkzeugmaschine integrieren zu können und die dort vorhandenen Versorgungsmedien, seien es hydraulische oder pneumatische Medien, die zum Betrieb etwaiger maschinenseitiger Elemente dienen, nutzen zu können. Üblicherweise sind die Versorgungsdrucke dieser Medien, beispielsweise einer Hydraulik, nicht allzu hoch und würden nicht unbedingt ausreichen, die Membran, die aus einem dünnen Metallblechring besteht, hinreichend weit radial zu verformen. Hier schafft nun die Erfindung Abhilfe, indem sie lageranordnungsseitig eine entsprechende Druckerhöhungseinrichtung vorsieht, die also in die Lageranordnung integriert beziehungsweise Teil derselben ist. Über diese Einrichtung ist der Druck des zugeführten Mediums, also beispielsweise eines Hydrauliköls soweit erhöhbar, dass er ohne weiteres ausreichend ist, um die Membran hinreichend weit radial zu verformen. Das heißt, dass die erfindungsgemäße Lageranordnung ohne weiteres in bestehende Arbeits- oder Werkzeugmaschinen etc. integriert werden kann, ohne dass maschinenseitig besondere Vorkehrungen wie spezielle Pumpen oder dergleichen vorzusehen wären, um den hinreichenden Mediumdruck bereitzustellen. Vielmehr ist die erfindungsgemäße Lageranordnung eine abgeschossene, integrierte Einheit, die lediglich an die vorhandene Hydraulik oder dergleichen anzuschließen ist und die selbsttätig die Betriebsbereitschaft herstellt.

Die erfindungsgemäße Lageranordnung ist damit in der Lage, bedarfsabhängig sowohl die Eigenschaften eines Loslagers als auch eines Festlagers an einem Wälzlager realisieren zu können. Im Betrieb der Werkzeugmaschine, bei der die Lageranordnung integriert ist, wird das Wälzlager über die Druckkammer verspannt, so dass es die Eigenschaften eines axial sehr starren Festlagers aufweist. Während einer Bearbeitungspause kann durch einfaches, schnelles Lösen der radialen Verspannung der thermische Längenausgleich wie im Falle eines konventionellen Loslagers vollzogen werden.

Hinsichtlich der konkreten Ausgestaltung der Lageranordnung zur Realisierung der reversiblen, bedarfsabhängigen Klemmmöglichkeit sind zwei unterschiedliche Alternativen gegeben. Nach einer ersten Erfindungsausgestaltung kann die Druckkammer direkt an einem Außenring des Außenlagers vorgesehen sein. Hier wird also die Druckkammer und damit die Verklemmmöglichkeit direkt in das Wälzlager selbst integriert. Eine Alternative sieht vor, dass die Druckkammer an einem auf den Außenring des Wälzlagers aufgesetzten, mit diesem drehfest verbundenen Druckring vorgesehen ist. Auch bei dieser Ausgestaltung erfolgt eine vollständige Integration der Verklemmmöglichkeit in die erfindungsgemäße Lageranordnung, jedoch nicht unmittelbar im Wälzlager selbst, sondern mittels eines Zusatzbauteils in Form eines Druckrings, der drehfest mit dem Außenring des Wälzlagers beispielsweise verschraubt wird. Dies bietet die Möglichkeit, bereits bestehende Lageranordnungen mit der erfindungsgemäßen reversiblen Verklemmmöglichkeit nachzurüsten, wobei hierzu gegebenenfalls auch eine Variation im Lagerbock vorzunehmen ist. Grundsätzlich jedoch bieten beide Möglichkeiten, also die unmittelbare Integration der Druckkammer in den Außenring des Wälzlagers oder das Aufsetzen eines separaten Druckrings den erfindungsgemäßen Vorteil der reversiblen, flexiblen Klemmmöglichkeit.

Zur Realisierung der Druckkammer ist zweckmäßigerweise an der Außenseite des Außenrings oder des Druckrings eine umlaufende, beidseits axial begrenzte Nut vorgesehen, die die Druckkammer bildet und die von der Membran übergriffen ist. Die Nut weist zweckmäßigerweise an beiden Enden des Außenrings oder des Druckrings axial begrenzende Randstege auf, auf denen die Membran, vorzugsweise ein Metallring, der bei anliegendem Innendruck radial beweglich ist, aufsitzt. Das heißt, die Wandstärke des Membranrings sowie das verwendete Material ist entsprechend zu wählen, so dass sich der gewünschte Reibschluss zwischen der Membran und der entsprechenden Oberfläche (= Lagersitz) im Lagerbock ergibt. Die massiven Randstege, die die Druckringnut axial begrenzen, gewährleisten eine hohe Steifigkeit der Druckkammergestaltung und des Lagers, weil sich die konkrete Gestaltung der Druckkammer, insbesondere ihre geometrischen Abmessungen, nach der Höhe der geforderten axialen Haltekräfte und somit der notwendigen radialen Verspannkräfte richtet. Die Druckkammer kann auch durch eine U-förmige Membran und glatte Au-Benkontur des Lagers gebildet werden, so dass die Randstege Bestandteile der Membran sind. Die Gestaltung der Membran ist so zu wählen, dass sie sich in großer Fläche an den Lagersitz anlegt und verspannt.

Der Außenring oder der Druckring und die Membran sind mittels eines Dichtelements oder stoffschlüssig (Schweißen, Löten) gegeneinander abgedichtet. Das verwendete Dichtelement oder die stoffschlüssige Verbindung sind so gewählt, dass die Druckkammer auch bei hohem Innendruck (gasdicht/ flüssigkeitsdicht) dicht ist. Zweckmäßigerweise ist am Außenring oder dem Druckring und/oder der Membran eine umlaufende Aufnahmenut für das Dichtelement in Form eines Dichtrings oder das Dichtmittel, das in die Nut eingebracht wird, vorgesehen (bzw. entsprechende Fügestelle vorzubereiten).

Gemäß einer konkreten Erfindungsausgestaltung kann die Einrichtung einen linear bewegbaren Kolben umfassen, der einen Durchgangskanal für das Druckmedium aufweist. Die Einrichtung umfasst also eine "Druckübersetzung" in Form eines linear bewegbaren Kolbens, der bevorzugt parallel zur Drehachse des Wälzlagers, dem er zugeordnet ist, axial bewegbar ist. Der Kolben ist längs durchbohrt. Das Übersetzungsverhältnis wird durch die beidseits vorgesehenen Kolbenstirnflächen, die die hydraulisch wirksamen Flächen sind, bestimmt.

Der Kolben ist zweckmäßigerweise innerhalb einer zylindrischen Aufnahme bewegbar angeordnet, von welcher ein vorzugsweise im Wesentlichen radial verlaufender Zuführkanal für über den Kolben zugeführtes Hydraulikfluid zur Druckkammer läuft. Diese zylinderartige Aufnahme wie auch der Kolben sind also parallel zur Wälzlager-Drehachse angeordnet, was eine einfache Integration in den Außenring des Wälzlagers oder in den Druckring ermöglicht, ohne allzu sehr radial aufzubauen. Die Kopplung zur Druckkammer erfolgt dann über den radial verlaufenden Stichkanal.

Der Kolben selbst ist in der Aufnahme mit besonderem Vorteil an beiden Seiten über Federelement vorgespannt gelagert. Über diese Federn, üblicherweise Schraubenfedern, wird er in einer definierten Ausgangslage gehalten. Diese Nullstellung des Kolbens im drucklosen Zustand beziehungsweise bei gleichem Druck seitens der Druckkammer wie auch der Hydraulikzufuhr befindet sich in definiertem Abstand von den beiden Endlagen des Kolbens, die über die entsprechenden Endanschläge in der zylinderartigen Aufnahme definiert sind. Über einen dieser Endanschläge wird des Weiteren die Volumenverminderung in der Druckkammer und somit der maximale Überdruck in der Druckkammer begrenzt, so dass ein "Explodieren" der Druckkammer vermieden werden kann. Dies könnte eintreten, wenn die Druckkammer mit Hydraulikdruck im nicht eingebauten Zustand beaufschlagt wird. Da die Stützwirkung des Lagersitzes, gegen die Druckkammer anliegt, in diesem Fall nicht gegeben ist, ist ein "Explodieren" der Membran möglich. Dies wird über den Endanschlag ausgeglichen, indem in diesem Fall eine weitere Mediumzufuhr über den Kolben in die Druckkammer unterbunden wird.

Zur Lagerung der Federelemente ist kolbenseitig entweder eine im Wesentlichen zylindrische Aufnahme vorgesehen, in die ein Federelement eingesetzt ist, das sich mit dem anderen Ende an der endseitigen, den Endanschlag definierenden Aufnahmewand abstützt. Alternativ ist es auch denkbar, dass sich das Federelement an einer am Kolben vorgesehenen stirnseitigen Anlagefläche abstützt.

Die Aufnahme selbst ist zweckmäßigerweise in wenigstens zwei Kammern unterteilt, wobei in eine erste Kammer das zugeführte Druckmedium einströmt, welche Kammer dem Kolben vorgeschaltet ist, wobei durch die Kolbenbewegung in einer zweiten dem Kolben nachgeschalteten Kammer eine Druckerhöhung erfolgt. Der axial bewegliche Kolben definiert die einzelnen Kammern sowie deren variable Größe. Der zweiten Kammer nachgeschaltet ist der bereits beschriebene Zuführkanal, der dann zur Druckkammer unterhalb der Membran führt. Der Kolben ist innerhalb der Aufnahme zwischen diesen beiden Kammern beweglich. Durch die Gestaltung des Kolbens kann über die Wahl der hydraulischen Kolbenfläche das Übersetzungsverhältnis eingestellt werden, gleichzeitig beeinflussen diese Flächen über das durch Axialbewegung beschriebene Volumen den Hub und damit die Variation der Kammergrößen.

Eine zweckmäßige Weiterbildung der Erfindung sieht eine zwischen der ersten und der zweiten Kammer vorgesehene dritte Kammer vor, die als Sammelkammer für Leckagefluid aus der ersten und/oder der zweiten Kammer dient, und von welcher aus ein Überströmkanal insbesondere in den Bereich der Wälzkörper führt. Diese drucklose zwischengeschaltete Sammelkammer dient zur Aufnahme etwaigen Leckageöls, das aus dieser Sammelkammer über den Überströmkanal besonders zweckmäßig in den Wälzkontaktbereich zwischen den Lagerringen geführt wird und zur Schmierung der Wälzkörper dient. Denkbar ist aber auch eine Abführung des Leckageöls nach außen an die Umgebung. Gleichzeitig stellt der Überströmkanal den erforderlichen Zustand der Drucklosigkeit in der zwischengesetzten Kammer sicher.

Der Kolben selbst ist in der Aufnahme über wenigstens ein, vorzugsweise wenigstens zwei Dichtelemente, insbesondere Radialdichtelemente abgedichtet geführt, wobei über diese Dichtelemente auch die einzelnen Kammern zueinander abgedichtet werden. Etwaiges Leckagefluid sammelt sich in der dritten mittleren Kammer, wenn aus der ersten und/oder der zweiten Kammer Leckagefluid an den entsprechenden Dichtmitteln vorbei in diese mittlere Kammer tritt. Die Dichtelemente selbst sind zweckmäßigerweise in einem die dritte Kammer bildenden Bauteil eingesetzten Halte- und Führungselement, in dem der Kolben geführt ist, vorgesehen. Dieses Führungselement, bevorzugt ein Kunststoff- oder Metallbauteil mit zylindrischer Außen- und Innengeometrie, dient der Kolbenführung. Gleichzeitig können an ihm auf einfache Weise die entsprechenden Dichtringe angebracht werden. Hierüber wird eine sichere Führung wie auch Dichtung realisiert.

Eine besonders zweckmäßige Weiterbildung der Erfindung sieht vor, dass die Einrichtung ein Rückschlagventil zur Ermöglichung einer Nachspeisung von Hydraulikfluid bei einer Druckabnahme in der Druckkammer aufweist. Um die Ausgangslage des Kolbens in der Aufnahme auch dann zu erreichen, wenn das Ölvolumen der Hochdruckseite, also das Volumen in der zweiten Kammer und der Druckkammer, infolge Leckage oder Abkühlung verringert wird, wird ein Rückschlagventil vorgesehen, das bevorzugt in den Kolben, vorzugsweise an dem in der ersten Kammer angeordneten Kolbenende, integriert sein kann, jedoch auch parallel dazugeschaltet sein kann. Dieses hat die Aufgabe, bei Drucklosigkeit des Hydraulikanschlusses auf der Niederdruckseite einen Volumenstrom in die Hochdruckkammer freizugeben, wenn dort eine Volumenminderung eingetreten ist. In diesem Fall öffnet das Rückschlagventil und ein ausgleichender Fluidstrom strömt in die Hochdruckseite, bis die Druckdifferenz zwischen der ersten und der zweiten Kammer kleiner ist als der Schließdruck des Rückschlagventils. Die Gleichgewichtslage des Kolbens kann hierüber auf einfache Weise wieder erreicht werden, auch wenn sich die Druckverhältnisse aufgrund äußerer Umstände geändert haben.

Bevorzugt wird das Rückschlagventil in den Kolben integriert, wozu dieser eine Ventilaufnahme aufweist, in der ein Federelement und ein gegen das Federelement bewegbar gelagertes Schließelement, das sich an einem Dichtsitz abstützt, angeordnet ist.

Wie bereits beschrieben, ist der Kolben beidseits über je ein Federelement gelagert. Durch die Anordnung dieser Druckfedern kann die Kolbenbewegung und gleichzeitig die Kolbenrückstellung sichergestellt werden. Durch die Anordnung einer Feder auf der Seite der Niederdruckkammer, also in der ersten Kammer, wird zudem eine Verschiebung des Druckübersetzerkolbens gegen den Niederdruckanschluss, also in die erste Kammer, bei einer Volumenzunahme des Druckmediums in der Hochdruckkammer ermöglicht. Eine solche Volumenzunahme kann beispielsweise durch Erwärmung entstehen. Hieraus resultiert eine Bewegung des Kolbens in Richtung der ersten Niederdruckkammer, um den Druck auszugleichen, so dass der Druck nicht unzulässig weit ansteigt. Sollte der Druck jedoch so weit ansteigen, dass der Kolben so weit verschoben wird, bis er gegen den Endanschlag in der Aufnahme läuft, also auf Block läuft, sieht eine vorteilhafte Weiterbildung der Erfindung zur Verringerung einer extremen Druckzunahme, die in jedem Fall zu vermeiden ist, vor, eine Einrichtung zur Zwangsöffnung des Rückschlagventils zu integrieren. Diese Einrichtung zur Zwangsöffnung umfasst vorteilhafterweise einen Dorn, gegen den das Schließelement des Rückschlagventils bei einer Bewegung des Kolbens in die erste Kammer infolge einer Drucküberhöhung in der zweiten Kammer unter Öffnung des Ventils läuft. Hierüber wird sichergestellt, dass bei einer derartig starken Druckzunahme in der Hochdruckkammer sichergestellt ist, dass das Rückschlagventil spätestens dann geöffnet wird, wenn die Gefahr besteht, dass der Kolben gegen den Endanschlag läuft. Über die Zwangsöffnung des Rückschlagventils wird ein Abfluss des Druckmediums aus der Hochdruckkammer und damit ein Druckausgleich ermöglicht.

Zur einfachen Kopplung der erfindungsgemäßen Lageranordnung bzw. des Außenrings des Wälzlagers respektive des Druckrings, je nachdem, wo die Einrichtung integriert ist, mit der maschinenseitigen Druckmediumzufuhr weist die Einrichtung zweckmäßigerweise einen an dem Außenring des Wälzlagers oder dem Druckring angeordnetes Bauteil auf, über das die Zufuhr des Druckmediums erfolgt. Zweckmäßigerweise ist dieses Bauteil als einen Teil der ersten Kammer bildend ausgeführt, gegebenenfalls weist es auch die Einrichtung zur Zwangsöffnung des Rückschlagventils, vornehmlich in Form des Dorns, auf.

Der Außenring oder der Druckring sowie die Membran sind zweckmäßigerweise mittels eines Dichtelements oder einer stoffflüssigen Verbindung gegeneinander abgedichtet, wobei am Außenring oder dem Druckring und/oder der Membran eine umlaufende Aufnahme für ein solches Dichtelement vorgesehen sein kann.

Die Lageranordnung selbst ist zweckmäßigerweise als eine Vorschubeinrichtung umfassend eine Spindel ausgeführt.

### Kurze Beschreibung der Zeichnung

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Lageranord- nung,
- Fig. 2: eine Längsschnittansicht des als Fest- und Loslager schaltbaren Wälzlagers aus Fig. 1,
- Fig. 3: eine nochmals vergrößerte Detailansicht des Bereichs des Fest- lagers mit der integrierten Druckerhöhungseinrichtung,
- Fig. 4: eine weitere Ausführung einer erfindungsgemäßen Lageranord- nung in einer Teilansicht im Schnitt, und
- Fig. 5: eine Schnittansicht durch eine nicht erfindungs gemäße, als separates Bauteil zu verbau- ende Vorrichtung.

### Ausführliche Beschreibung der Zeichnung

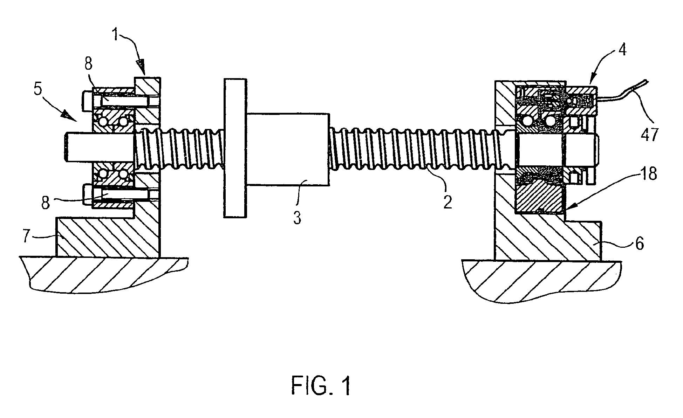

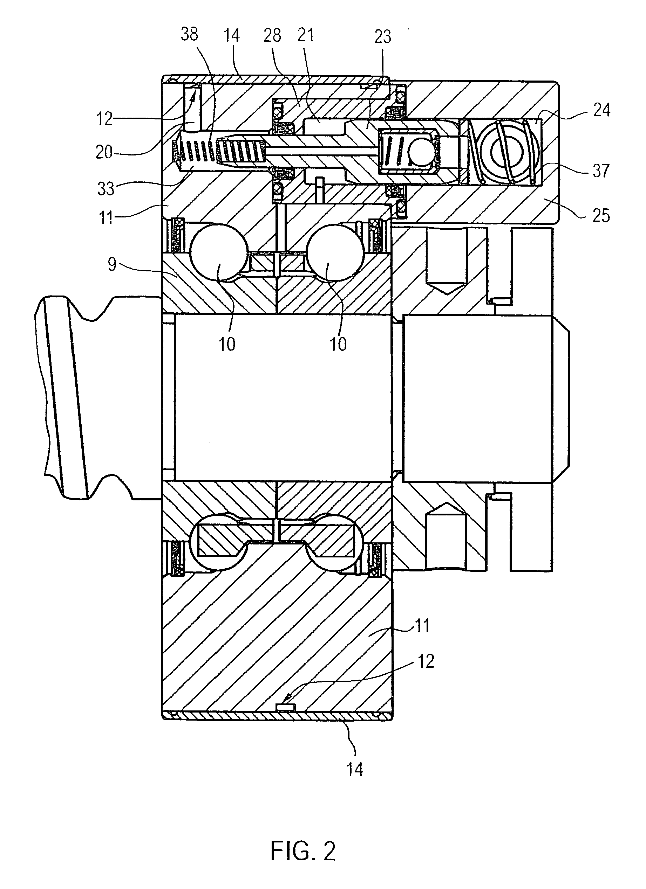

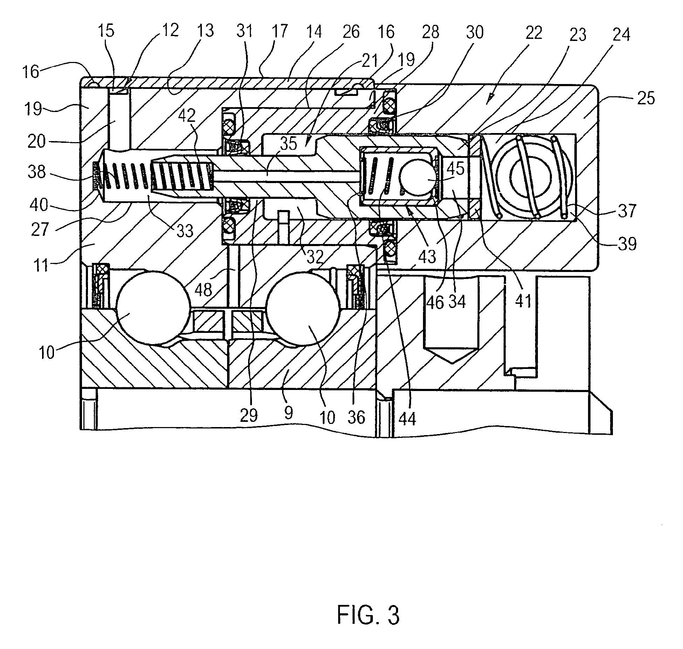

Fig. 1 beschreibt eine erfindungsgemäße Lageranordnung 1, umfassend eine Gewindespindel 2, auf der in bekannter Weise eine Gewindemutter 3 läuft, die, wenn die Lageranordnung ein Teil einer Werkzeugmaschine ist, mit einem axial zu bewegenden Werkzeugelement oder dergleichen verbunden ist. Die Gewindespindel 2 ist in zwei Wälzlager 4, 5, die an jeweils einem Lagerbock 6, 7 angeordnet sind, an beiden Enden gelagert. Das Wälzlager 5, hier ein doppelreihiges Schrägkugellager, ist als reines Festlager ausgeführt, es ist über Schraubverbindungen 8 fest mit dem Lagerbock 7 verschraubt. Demgegenüber ist das Wälzlager 4 als reversibel zwischen einer Eigenschaft als Festlager und einer Eigenschaft als Loslager schaltbares Lager ausgeführt, wozu das Wälzlager 4, worauf nachfolgend noch eingegangen wird, radial verformbar ist, um es in reibschlüssige Anlage mit dem Lagerbock 6 zu bringen. Die Fig. 2 und 3 zeigen in jeweils vergrößerten Schnittansichten das Wälzlager 4 aus Fig.1 (Fig. 2) sowie einen nochmals vergrößerten Teilausschnitt des Wälzlagers (Fig. 3). Das Wälzlager 4 besteht aus einem Innenring 9, der fest auf der Gewindespindel 2 aufsitzt. Über zwei Kugelreihen 10 ist der Außenring 11 drehgelagert, die gezeigte Ausgestaltung ist hier als Schrägkugellager ausgeführt. Gleichwohl können selbstverständlich auch andere beliebige Lagertypen zum Einsatz kommen.

Am Außenring 11 ist eine Druckkammer 12 realisiert. Diese wird durch die Innenfläche 13 einer Membran 14, hier ein Ring aus einem dünnen Metallblech, und die Außenkontur des Lageraußenrings definiert. Am Lageraußenring 11 ist eine spiralförmig umlaufende Nut 15 ausgebildet, die entlang seiner Außenseite läuft. Diese Nut 15 wird von der Innenfläche 13 der Membran 14 abgedeckt. In diese Nut 15 kann, wie nachfolgend noch ausgeführt wird, unter hohem Druck ein Fluid gepresst werden, wobei sich bei hinreichendem Fluiddruck die Membran 14 radial nach außen wölbt. Das Fluid kann dann auch aus der Nut 15 heraus unter die Membran-Innenfläche 13 strömen. Die Membran 14 ist randseitig fest mit dem Lageraußenring verbunden, gegebenenfalls können in entsprechenden Aufnahmen 16 Dichtmittel vorgesehen sein. Hierüber wird in axialer Richtung die Druckkammer begrenzt. Wird in der Druckkammer 12 ein hinreichend hoher Druck auf die Membran 14 ausgeübt, so wölbt sich diese radial nach außen und legt sich mit ihrer Außenfläche 17 reibschlüssig gegen die Gegenlagerfläche 18 am Lagerbock 6 (siehe Fig. 1). Der Reibschluss realisiert eine derart hohe Haltekraft, dass das Wälzlager 4, das zuvor nicht am Lagerbock 6 anlag, fest und axial fixiert im Lagerbock 6 verklemmt ist, so dass keine Axialbewegung möglich ist, auch wenn hohe Axialkräfte aufgrund einer thermischen Längenänderung der Gewindespindellänge auftreten. Die Axialkräfte werden über die Membran 14 in den Lagerbock 6 geführt.

Durch die Gestaltung des Außenrings 11 mit der Druckkammer 12 kann insbesondere über die Wandstärke und Führungslängen direkt Einfluss auf die Radial, Axial- und Kippsteifigkeit genommen werden. Zur Gewährleistung einer hohen Steifigkeit in Radialrichtung ist die Gestaltung massiver Stege 19, an denen die Membran 14 befestigt ist, an den Stirnseiten des Außenrings 11 von Vorteil. Für die Führungslänge im Lagersitz wird die gesamte Lagerbreite genutzt, um eine hohe Kippsteifigkeit zu erzielen. Die Kippsteifigkeit kann ferner durch eine Erhöhung der Wandstärke der Membran 14 im Mittenbereich gesteigert werden, so dass sich die Membran 14 gleichmäßig in dem Lagerbock 6 bzw. an der Gegenlagerfläche 18 verspannt. Aus dem Betrieb resultierende Radialkräfte werden über die beschriebenen Stege 19 im Außenring 11 in den Lagerbock 6 geleitet, während die axialen Betriebslasten über den an der Membranoberfläche 17 erzeugten Reibschluss abgeführt werden. Die Gestaltung der Druckkammer 12, insbesondere ihre geometrischen Abmessungen, richtet sich nach der Höhe der geforderten axialen Haltekräfte und somit der notwendigen radialen Spannkräfte. Das Volumen in der Druckkammer 12 ist gemessen an der Kammerlänge und dem Außendurchmesser der Gesamtkonstruktion klein zu halten, um eine hohe hydraulische Steifigkeit zu erreichen. Dem wird in der dargestellten Ausführung durch eine kleine Kammerhöhe und die Gestaltung der Membran Rechnung getragen, die sich im Betrieb nur um wendige Mikrometer nach außen wölbt und mithin in einer sehr genauen Passung im Lagerbock 6 aufgenommen ist.

Die Kontaktfläche zwischen den Stegen 19 und der elastischen Membran 14 kann als Bauteilpaarung mit statischer Abdichtung oder einer stoffschlüssigen Verbindung (Schweiß, Löt- oder Klebeverbindung) ausgeführt sein. Die konkrete Realisierung hängt letztlich von den zu übertragenden Kräften, den gegebenen Anwendungsfällen sowie etwaigen konstruktiven gestalterischen Besonderheiten ab.

Die Zufuhr eines Druckmediums erfolgt über einen im Wesentlichen radial verlaufenden Zuführkanal 20, der über eine hohlzylindrische, mehrere Kammern ausbildende zylinderartige Aufnahme 21 gespeist wird. In diese Aufnahme 21, die Teil einer Einrichtung 22 zur Erhöhung des Drucks des zugeführten Druckmediums ist, ist ein Kolben 23 axial bewegbar aufgenommen. Die Aufnahme 21 ist in drei einzelne Kammern unterteilt. Eine erste Kammer 24 ist in einem Bauteil 25 realisiert, das entsprechende, nicht näher gezeigte Anschlussmittel für eine Zuleitung des Druckmediums aufweist, und das separat am Außenring 11 befestigt ist. Am Außenring 11 selber ist eine erste Einsenkung 26 mit größerem Durchmesser realisiert, an die sich eine zweite Einsenkung 27 kleineren Durchmessers anschließt. In die erste Einsenkung 26 ist ein Halte- und Führungselement 28, beispielsweise ein Kunststoffbauteil, eingesetzt, das der Halterung und Führung des axial beweglichen Kolbens 23 dient. Der Innendurchmesser dieses Halte- und Führungselements 28 entspricht im Wesentlichen dem Außendurchmesser des Kolbens 23 an seinem der ersten Kammer 24 zugeordneten Ende. Über einen Ansatz 29 ist das Halte- und Führungselement 28 am anderen Ende eingeschnürt, in diesem Bereich ist der Kolben 23 mit seinem schmäleren länglichen Abschnitt geführt. Die Kolbenführung erfolgt jeweils abgedichtet, hierzu sind entsprechende Dichtelemente 30, 31 vorgesehen, die an dem Halte- und Führungselement 28 vorgesehen sind. Im Inneren des Halte- und Führungselements 28 ist eine dritte Kammer 32 realisiert, auf die nachfolgend noch eingegangen wird, und die als Sammelkammer für etwaiges Leckagefluid dient.

In axialer Verlängerung an diese Kammer 32 anschließend ist im Bereich der Einsenkung 27 eine zweite Kammer 33 realisiert, die die Hochdruckkammer darstellt, während die Kammer 24 die Niederdruckkammer ist. Von der Kammer 33 zweigt der Zuführkanal 20 in den Bereich der Druckkammer 15 ab, bzw. bildet dieser Zuführkanal 20 letztlich bereits einen Teil der Druckkammer.

Der Kolben 23 weist einen Durchgangskanal auf, mit einem Kanalabschnitt 34 größeren Durchmessers, der in einen den Kolben 23 schließlich durchsetzenden weiterführenden Kanalabschnitt 35 geringeren Durchmessers mündet. Die Durchmesserveränderung ist für die noch zu beschreibende Integration eines Rückschlagventils erforderlich. Über diese Kanalabschnitte 34, 35 kann das Druckmedium, das in die erste Kammer 24 zugeführt wird, in die zweite Kammer 33 und von dort in die Druckkammer 15 gelangen. Im Allgemeinen beträgt der zur Verfügung stehende Fluiddruck einer Hydraulikversorgung einer Werkzeugmaschine ca. 60 bar, dieser Druck ist mitunter nicht ausreichend, um die Membran 14 in die erforderliche reibschlüssige Anlage im Lagerbock 6 zu bringen. Zu diesem Zweck dient die Einrichtung 22, über sie kann der Druck deutlich erhöht werden, so dass auf vorhandene Hydrauliksysteme bei bekannten Maschinen aufgesetzt werden kann.

Der Kolben 23 ist ferner an beiden Ende über Federelemente 37, 38 gegen entsprechende Rückstellkräfte gelagert. In der Ausgangsstelle befindet er sich in einer Mittenstellung zwischen den jeweiligen kammerseitigen Endanschlägen 39, 40. Während das Federelement 37, hier Schraubenfeder, an einer stirnseitigen Anlagefläche 41 aufgelagert ist, ist das ebenfalls als Schraubenfeder ausgeführte Federelement 38 in einer entsprechenden Eintiefung 42 am Kolbenende aufgenommen.

Am Kolben 23 im Bereich seines der ersten Kammer 24 zugewandten Ende ist ferner ein Rückschlagventil 43 integriert, bestehend aus einem Federelement 44, auch hier in Form einer Schraubenfeder, sowie einem Schließelement 45, hier in Form einer Kugel, die in der Schließstellung in einem Dichtsitz 46 aufgenommen ist, bzw. dort anliegt.

Wird nun über die Hydraulikfluidzufuhr (entsprechendes gilt für ein pneumatisches System) das hydraulische Druckmedium in die erste Kammer 24 geführt, so strömt es gegen den Kolben 23 und öffnet bei hinreichendem Druck das Rückschlagventil 43. Das Fluid strömt sodann weiter durch den vom Durchmesser her stark reduzierten Durchgangskanalabschnitt 35 in den Bereich der zweiten Hochdruckkammer 33 und von dort unter die Membran 14, bis der Gleichgewichtsdruck eingestellt ist, das Rückschlagventil schließt und der Kolben bewegt sich, die Membran wölbt sich auf. Nach Schließen des Rückschlagventils wird der Kolben 23 in der Fig. 3 gezeigten Lagerstellung nach links bewegt, d. h., er bewegt sich in die zweite Kammer 33 hinein. Infolge des hohen Drucks wölbt sich die Membran 14 nach außen und verspannt das Wälzlager im Lagerbock 6, das dann als Festlager geschaltet ist. Das Rückschlagventil 43 verhindert einen Rückfluss, so dass es bei der festen Verspannung bleibt, solange der Fluiddruck ansteht. Das Rückschlagventil 43 hat darüber hinaus die Aufgabe, bei Drucklosigkeit des Hydraulikanschlusses auf der Niederdruckseite, also in der ersten Kammer 24, einen Volumenstrom in die Hochdruckkammer frei zu geben, wenn dort eine Volumenminderung aufgetreten war, beispielsweise infolge eines Abkühlens. In diesem Fall öffnet das Rückschlagventil und ein ausgleichender Mediumstrom strömt aus der ersten Kammer 24 in die zweite Kammer 33, bis die Druckdifferenz zwischen den beiden Kammern kleiner ist als der Schließdruck des Rückschlagventils. Das Rückschlagventil 43 dichtet hiernach wieder ab, die Gleichgewichtslage des Kolbens 23 ist erreicht.

Durch die Anordnung des Federelements 37 in der Niederdruckkammer 24 wird zudem eine Verschiebung des Kolbens 23 gegen den Fluidanschluss bei einer Volumenzunahme des Druckmediums in der Hochdruckkammer 33, letztlich also in der Druckkammer 12, ermöglicht. Eine Volumenzunahme in diesem Bereich kann durch Erwärmung entstehen und kann infolge des beweglichen Kolbens 23 ausgeglichen werden. Ein unzulässiges Ansteigen des Drucks auf der Hochdruckseite kann vermieden werden.

Bei einer Druckbeaufschlagung in der Niederdruckkammer 24 über den Druckmediumsanschluss, der in Fig. 1 exemplarisch mit der Druckmediumzuleitung (Hydraulikleitung) 47 dargestellt ist, wird Druckmedium mit dem von dem maschinenseitigen Hydrauliksystem gegebenen Druck, beispielsweise von 60 bar, zugeführt. Dies erfolgt, wenn zuvor ein Signal "Klemmen des Lagers" gegeben wurde, wenn also das zuvor als Loslager geschaltete Lager als Festlager verspannt werden soll. Der Kolben 23 verschiebt sich dann gegen das linke Federelement 38 aufgrund der Kompressibilität des Hydraulikmediums, der Volumenvergrößerung der Membrankonstruktion und etwaiger Leckagen nach links, bis sich ein Kräftegleichgewicht am Kolben einstellt. Ist dieses erreicht, beträgt der Druck in der Hochdruckkammer 33 und damit auch in der Druckkammer 12 für den Fall eines angenommenen Übersetzungsverhältnisses von 4 (realisiert über die hydraulisch wirksamen Kolbenflächen und die Durchmesser des Kolbens 23) 240 bar. Wird die Hydraulikversorgung drucklos geschaltet (es wird also ein Signal "Lösen des Lagers" gegeben, d. h., das Lager soll vom Festlager wieder auf ein Loslager geschaltet werden), so liegt ein Druck von 0 bar am Hydraulikanschluss an. Infolge des noch höheren Drucks in der Druckkammer 12 und der Hochdruck-Kammer 33 verschiebt sich der Kolben 23 wieder nach rechts gegen das Federelement 37 in die Ausgangslage, also die definierte Mittenlage.

In der dritten Kammer 32 ist ferner ein Überströmkanal 48 vorgesehen, über den sich in der dritten Kammer 32 ansammelndes Leckagefluid in den Bereich zwischen dem Wälzlager 10 abgeführt werden kann. Durch Leckage austretendes Hydrauliköl kann auf diese Weise abgeführt und zur Schmierung des Wälzkontaktes genutzt werden. Gleichzeitig stellt der Überströmkanal 16 auch den erforderlichen Zustand der Drucklosigkeit in der dritten Kammer 32 sicher.

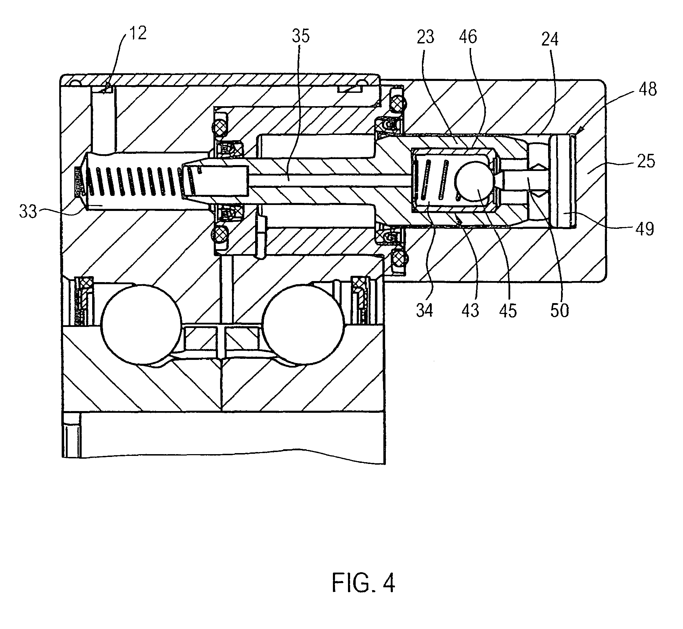

Fig. 4 zeigt eine Schnittansicht ähnlich der gemäß Fig. 3 einer zweiten Ausführungsform einer erfindungsgemäßen Lageranordnung in einer Teilansicht. Die Ausführung entspricht insoweit der gemäß der zuvor beschriebenen Ausgestaltung, jedoch ist hier in der Niederdruckkammer kein Federelement vorgesehen, ein solches ist hier nicht unbedingt erforderlich. Anders als dort ist hier jedoch in der ersten Kammer 24 eine Einrichtung 48 zur Zwangsöffnung des Rückschlagventils 43. Diese Einrichtung 48 umfasst einen an einer Basis 49 axial vorspringenden Dorn 50. Wird aufgrund einer Drucküberhöhung in der Druckkammer 12, beispielsweise resultierend aus einer starken Erwärmung des Druckmediums, der Kolben nach rechts in die erste Kammer 24 gedrängt, was möglich ist, da das Rückschlagventil 43 bei einer solchen Druckbeaufschlagung geschlossen ist, so kann bei zu starker Drucküberhöhung der Fall eintreten, dass der Kolben 23 gegen den Boden des Bauteils 25 laufen würde, er würde also auf Block laufen. Eine weitere Drucküberhöhung könnte im schlimmsten Fall zur Zerstörung der gesamten Einrichtung führen. Um dies auszuschließen ist der Dorn 50 vorgesehen, gegen den der Kolben 23 bzw. das Rückschlagventil 43 in diesem Fall läuft. Das Schließelement 45 in Form der Kugel läuft bei dieser Bewegung auf den Dorn 50 auf. Eine weitere Bewegung des Kolbens 23 nach rechts in die erste Kammer 24 führt dazu, dass die Kugel aus ihrem Dichtsitz im Kugelsitz 46 gedrückt wird, worüber sich die Durchgangsbohrung 43 öffnet, so dass das unter hohem Druck in der Druckkammer 12 bzw. der zweiten Kammer 33 und der Durchgangsbohrung 35 befindliche Druckmedium in die erste Kammer 24 und von dort aus zurück in die Druckmediumszuleitung 47 strömen kann. Hierüber kann also ein unzulässig hoher Druck vermieden werden.

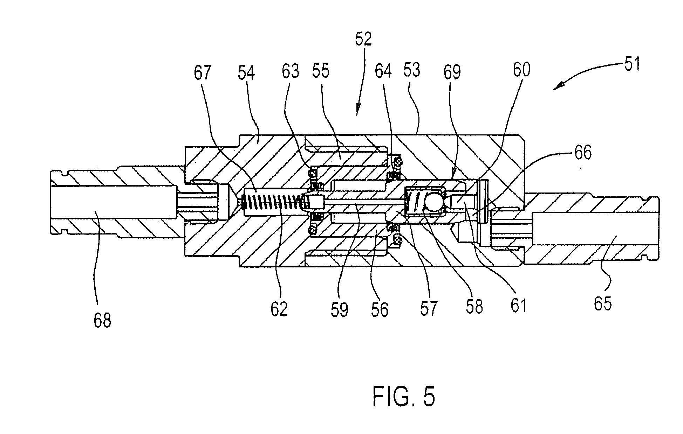

Fig. 5 zeigt eine Schnittansicht durch eine nicht erfinderische, als separates Bauteil zu verbauende Vorrichtung 51, die in eine beispielsweise ein Hydrauliköl fördernde Druckleitung integriert wird, die zu einer Lageranordnung führt, die lediglich eine flexible Membran nebst Druckkammer aufweist, jedoch keine integrierte Druckverstärkungseinrichtung, wie die zuvor beschriebene Ausführungsform. Vielmehr erfolgt die Druckerhöhung über die in Fig. 5 gezeigte Einrichtung 51. Diese besteht aus einem Gehäuse 52 umfassend zwei Gehäuseteile 53, 54, die miteinander verschraubt werden. In das Gehäuseteil 54 ist in einem zylindrischen Ansatz 55 wiederum ein Halte- und Führungselement 56 eingesetzt, in dem ein Kolben 57 geführt ist, der wiederum einen Durchgangskanal mit zwei Kanalabschnitten 58, 59 aufweist. Im Kanalabschnitt 58 ist wiederum ein Rückschlagventil 69 angeordnet, dem eine Einrichtung 60 nebst einem Dorn 61 zur Zwangsöffnung vorgeschaltet ist. Der Kolben ist über eine Druckfeder 62 gelagert, die Feder an der anderen Kolbenseite ist auch hier nicht unbedingt erforderlich. Über entsprechende Dichtmittel 63, 64 ist er abgedichtet im Halte- und Führungselement 56 geführt.

Über einen Zulauf 65 wird beispielsweise Hydrauliköl in die erste Kammer 66 gefördert, von dort tritt sie zunächst durch Zurückdrängen der Schließkugel des Rückschlagventils 69 in den Durchgangskanal und an der anderen Kolbenseite wieder in die zweite Kammer 67 aus, bis das Rückschlagventil schließt, dann verschiebt sich der Kolben und übersetzt den Druck. Die entsprechenden Hydraulikzu- und -ableitungen werden über geeignete Steck- oder Schraubverbindungen an den Zulauf 65 und den Ablauf 68 angeschlossen.

Das Funktionsprinzip ist hier das gleiche wie bei den zuvor beschriebenen Ausführungen beschrieben, jedoch handelt es sich hier um eine separat zu verbauende Einrichtung. Nachdem die Einrichtung separat verbaut und folglich nicht im Bereich eines Wälzlagers angeordnet ist, ist hier eine dritte Kammer nicht unbedingt erforderlich. Sie kann aber auch in diesem Fall zu Aufnahme und Ableitung von Leckageöl z. B. in einem Auffangbehälter vorgesehen sein.

### Bezugszahlenliste

- 1: Lageranordnung
- 2: Gewindespindel
- 3: Gewindemutter
- 4: Wälzlager
- 5: Wälzlager
- 6: Lagerbock
- 7: Lagerbock
- 8: Schraubverbindung
- 9: Innenring
- 10: Kugelreihe
- 11: Außenring
- 12: Druckkammer
- 13: Innenfläche
- 14: Membran
- 15: Nut
- 16: Aufnahme
- 17: Außenfläche
- 18: Gegenlagerfläche
- 19: Steg
- 20: Zuführkanal
- 21: Aufnahme
- 22: Einrichtung
- 23: Kolben
- 24: Kammer
- 25: Bauteil
- 26: Einsenkung
- 27: Einsenkung
- 28: Führungselement
- 29: Ansatz
- 30: Dichtelement
- 31: Dichtelement
- 32: Kammer
- 33: Kammer
- 34: Durchgangskanalabschnitt
- 35: Durchgangskanalabschnitt
- 36: Kolbenfläche
- 37: Federelement
- 38: Federelement
- 39: Endanschlag
- 40: Endanschlag
- 41: Anlagefläche
- 42: Eintiefung
- 43: Rückschlagventil
- 44: Federelement
- 45: Schließelement
- 46: Dichtsitz
- 47: Druckmediumzuleitung
- 48: Einrichtung zur Zwangsöffnung
- 49: Basis
- 50: Dorn
- 51: Vorrichtung
- 52: Gehäuse
- 53: Gehäuseteil
- 54: Gehäuseteil
- 55: Zylindrischer Ansatz
- 56: Halte- und Führungselement
- 57: Kolben
- 58: Kanalabschnitt
- 59: Kanalabschnitt
- 60: Einrichtung
- 61: Dorn
- 62: Druckfeder
- 63: Dichtmittel
- 64: Dichtmittel
- 65: Zulauf
- 66: Erste Kammer
- 67: Zweite Kammer
- 68: Ablauf
- 69: Rückschlagventil

## Patentansprüche

1. Lageranordnung umfassend eine Welle, die in zwei an Lagerböcken angeordneten Wälzlagern, von denen ein erstes als Festlager ausgeführt ist, drehgelagert ist, **dadurch gekennzeichnet, dass** das zweite Wälzlager (4) wenigstens eine von einer elastischen Membran (14) radial nach außen begrenzte, mit einem Druckmedium befüllbare Druckkammer (12) aufweist, welche Membran (14) sich bei in der Druckkammer (12) anstehendem Druck radial nach außen wölbt und sich bei fehlendem Druck elastisch zurückformt, derart, dass das Wälzlager (4) in einem Lagerbock (6) zur axialen Fixierung verklemmbar und im nicht geklemmten Zustand axial beweglich ist, wobei der Druckkammer (12) eine Einrichtung (22) zur Erhöhung des Drucks des zugeführten Druckmediums vorgeschaltet ist.

2. Lageranordnung nach Anspruch 1, **dadurch gekennzeichnet, dass** die Druckkammer (12) und die Einrichtung (22) direkt an einem Außenring (11) des Wälzlagers (4) vorgesehen ist, oder dass die Druckkammer (12) und die Einrichtung (22) an einem auf den Außenring (11) des Wälzlagers (4) aufgesetzten, mit diesem drehfest verbundenen Druckring vorgesehen ist.

3. Lageranordnung nach Anspruch 2, **dadurch gekennzeichnet, dass** an der Außenseite des Außenrings (11) oder des Druckrings eine umlaufende, beidseits axial begrenzte Nut (15) vorgesehen ist, die die Druckkammer (12) bildet und die von der Membran (12) übergriffen ist, oder dass die Kammer durch eine ebene Mantelfläche des Außenrings und eine gewölbte, insbesondere eine U-förmige Membran gebildet ist.

4. Lageranordnung nach einem der vorangehenden Ansprüche, **dadurch gekennzeichnet, dass** die Einrichtung (22) einen linear bewegbaren Kolben (23) umfasst, der einen Durchgangskanal (34, 35) für das Druckmedium aufweist, und der zwei unterschiedliche hydraulisch wirksame Kolbenflächen aufweist.

5. Lageranordnung nach Anspruch 4, **dadurch gekennzeichnet, dass** der Kolben in einer zylindrischen Aufnahme bewegbar angeordnet ist, wobei die Aufnahme (21) zwei Kammern (24, 33) aufweist, wobei in eine erste Kammer (24) das zugeführte Druckmedium einströmt, welche Kammer (24) dem Kolben (23) vorgeschaltet ist, und wobei eine zweite Kammer (33), in die das druckerhöhte Druckmedium strömt, dem Kolben (23) nachgeschaltet ist.

6. Lageanordnung nach einem der vorangehenden Ansprüche, **dadurch gekennzeichnet, dass** die Einrichtung (22) ein Rückschlagventil (43) zur Ermöglichung einer Nachspeißung von Hydraulikfluid bei einer Druckabnahme in der Druckkammer (12) aufweist.

7. Lageranordnung nach Anspruch 6, **dadurch gekennzeichnet, dass** eine Einrichtung (48) zur Zwangsöffnung des Rückschlagventils (43) vorgesehen ist.

8. Lageranordnung nach einem der vorangehenden Ansprüche, **dadurch gekennzeichnet, dass** der Außenring (11) oder der Druckring und die Membran (14) mittels eines Dichtelements oder einer stoffschlüssigen Verbindung gegeneinander abgedichtet sind.

## Claims

1. Bearing arrangement comprising a shaft which is rotationally mounted in two anti-friction bearings which are arranged on bearing blocks and of which a first is configured as a locating bearing, **characterized in that** the second anti-friction bearing (4) has at least one pressure chamber (12) which is delimited radially to the outside by an elastic diaphragm (14) and can be filled with a pressure medium, which diaphragm (14) bulges radially to the outside if pressure prevails in the pressure chamber (12) and regains its shape elastically in the absence of pressure, in such a way that the anti-friction bearing (4) can be clamped in a bearing block (6) for axial fixing and can be moved axially in the non-clamped state, a device (22) for increasing the pressure of the supplied pressure medium being connected in front of the pressure chamber (12).

2. Bearing arrangement according to Claim 1, **characterized in that** the pressure chamber (12) and the device (22) are provided directly on an outer ring (11) of the anti-friction bearing (4), or **in that** the pressure chamber (12) and the device (22) are provided on a thrust ring which is placed onto the outer ring (11) of the anti-friction bearing (4) and is connected fixedly to the said outer ring (11) so as to rotate with it.

3. Bearing arrangement according to Claim 2, **characterized in that** a circumferential groove (15) which is delimited axially on both sides, forms the pressure chamber (12) and is reached over by the diaphragm (12) is provided on the outer side of the outer ring (11) or of the thrust ring, or **in that** the chamber is formed by a planar circumferential face of the outer ring and an arched, in particular a U-shaped diaphragm.

4. Bearing arrangement according to one of the preceding claims, **characterized in that** the device (22) comprises a linearly movable piston (23) which has a passage channel (34, 35) for the pressure medium and has two different hydraulically active piston faces.

5. Bearing arrangement according to Claim 4, **characterized in that** the piston is arranged movably in a cylindrical receptacle, the receptacle (21) having two chambers (24, 33), the supplied pressure medium flowing into a first chamber (24), which chamber (24) is arranged in front of the piston (23), and a second chamber (33), into which the higher-pressure pressure medium flows, being arranged behind the piston (23).

6. Bearing arrangement according to one of the preceding claims, **characterized in that** the device (22) has a non-return valve (43) for making feeding in extra hydraulic fluid possible in the case of a pressure drop in the pressure chamber (12).

7. Bearing arrangement according to Claim 6, **characterized in that** a device (48) for coercive opening of the non-return valve (43) is provided.

8. Bearing arrangement according to one of the preceding claims, **characterized in that** the outer ring (11) or the thrust ring and the diaphragm (14) are sealed with respect to one another by means of a sealing element or a material-to-material connection.

## Revendications

1. Agencement de palier comprenant un arbre, qui est monté à rotation dans deux paliers à roulement disposés dans des supports de paliers, dont un premier est réalisé sous forme de palier fixe, **caractérisé en ce que** le deuxième palier à roulement (4) présente au moins une chambre de pression (12) pouvant être remplie d'un fluide sous pression, limitée radialement vers l'extérieur par une membrane élastique (14), laquelle membrane (14) se courbe radialement vers l'extérieur lorsqu'une pression est appliquée dans la chambre de pression (12) et se reforme élastiquement en l'absence de pression, de telle sorte que le palier à roulement (4) puisse être serré dans un support de palier (6) pour la fixation axiale et dans l'état non serré, puisse être déplacé axialement, un dispositif (22) pour augmenter la pression du fluide sous pression acheminé étant monté en amont de la chambre de pression (12).

2. Agencement de palier selon la revendication 1, **caractérisé en ce que** la chambre de pression (12) et le dispositif (22) sont prévus directement sur une bague extérieure (11) du palier à roulement (4), ou **en ce que** la chambre de pression (12) et le dispositif (22) sont prévus sur une bague de pression posée sur la bague extérieure (11) du palier à roulement (4) et raccordée de manière solidaire en rotation avec celui-ci.

3. Agencement de palier selon la revendication 2, **caractérisé en ce que** sur le côté extérieur de la bague extérieure (11) ou de la bague de pression est prévue une rainure périphérique (15) limitée axialement des deux côtés, qui forme la chambre de pression (12) et qui est en prise par le dessus par la membrane (12), ou **en ce que** la chambre est formée par une surface d'enveloppe plane de la bague extérieure et une membrane courbée, notamment en forme de U.

4. Agencement de palier selon l'une quelconque des revendications précédentes, **caractérisé en ce que** le dispositif (22) comprend un piston (23) à mouvement linéaire, qui présente un canal de passage (34, 35) pour le fluide sous pression, et qui présente deux surfaces de piston différentes à action hydraulique.

5. Agencement de palier selon la revendication 4, **caractérisé en ce que** le piston est disposé de manière déplaçable dans un logement cylindrique, le logement (21) présentant deux chambres (24, 33), le fluide sous pression acheminé affluant dans une première chambre (24), laquelle chambre (24) est montée en amont du piston (23), et une deuxième chambre (33), dans laquelle s'écoule le fluide sous pression à pression accrue, étant montée en aval du piston (23).

6. Agencement de palier selon l'une quelconque des revendications précédentes, **caractérisé en ce que** le dispositif (22) présente un clapet anti-retour (43) pour permettre une réinjection de fluide hydraulique en cas de chute de pression dans la chambre de pression (12).

7. Agencement de palier selon la revendication 6, **caractérisé en ce qu'**un dispositif (48) est prévu pour l'ouverture forcée du clapet anti-retour (43).

8. Agencement de palier selon l'une quelconque des revendications précédentes, **caractérisé en ce que** la bague extérieure (11) ou la bague de pression et la membrane (14) sont étanchées l'une par rapport à l'autre au moyen d'un élément d'étanchéité ou d'une connexion par liaison de matière.
